# EUROPEAN PATENT SPECIFICATION

(11) **EP 0 659 000 B1**
(45) Date of publication and mention of the grant of the patent: **08.08.2001**
(21) Application number: 94118783.3
(22) Date of filing: 29.11.1994
(51) Int. Cl.: H04L 25/06, H04L 27/14

(54) **Threshold setting and decision circuit**
Pegeleinstellungs- und Enscheidungsschaltung
Circuit de réglage de seuil et de décision

(30) Priority: 30.11.1993 JP 30037793
(43) Date of publication of application: 21.06.1995
(73) Proprietor: NEC CORPORATION, Tokyo (JP)
(72) Inventor: Kondo, Hisashi, c/o NEC Corporation, Tokyo (JP)
(74) Representative: VOSSIUS & PARTNER

(56) References cited:
- EP-A- 0 540 359
- WO-A-91/05427
- US-A- 4 873 702
- PATENT ABSTRACTS OF JAPAN vol. 013 no. 437 (E-826) ,29 September 1989 & JP-A-01 164151 (OKI ELECTRIC IND CO LTD) 28 June 1989,
- PATENT ABSTRACTS OF JAPAN vol. 013 no. 330 (E-793) ,25 July 1989 & JP-A-01 093950 (NIPPON TELEGR & TELEPH CORP) 12 April 1989,

## Description

The present invention relates to a demodulation circuit in a radio communication system using digital modulation, and more specifically to a demodulation circuit for demodulating a detected signal to an original digital signal through code discrimination.

In recent years, mobile communication systems are employing digital systems from the viewpoints of the matching with computer communication and of providing a variety of services. Particularly, a Frequency Shift Keying (FSK) system ensures effectual high-frequency power amplification because the amplitude of a modulated signal is kept unchanged. Therefore, the FSK system is a modulation system suitable for portable radio apparatuses. Further, in the FSK system, there are proposed various systems such as an MSK (minimum shift keying) and a GMSK (Gaussian filtered MSK) where spreading of the spectrum of a signal is narrowed, which can effectually utilize a limited frequency band.

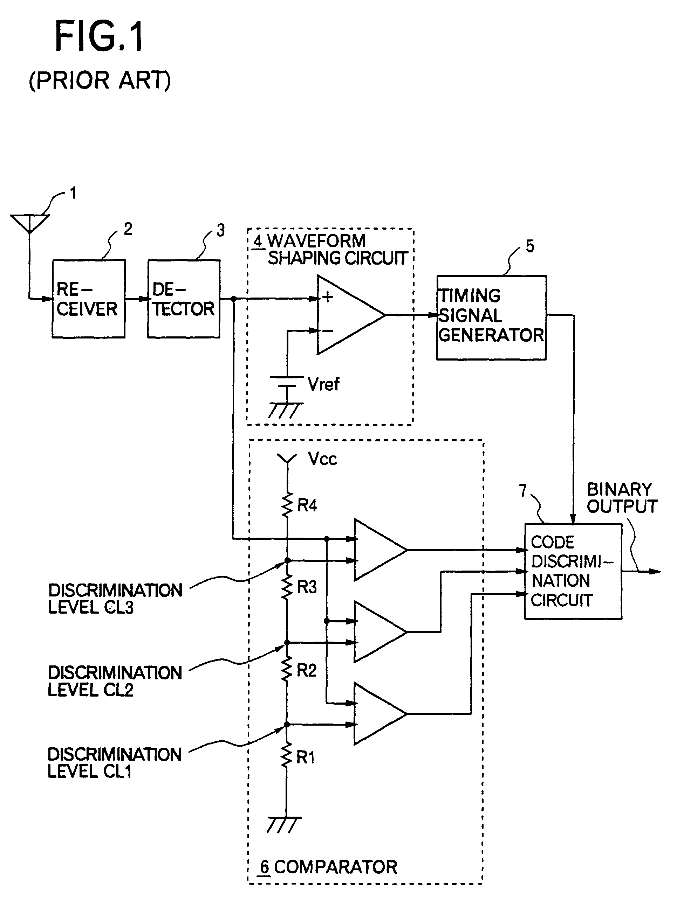

In a radio communication system using such digital modulation, a receiver requires a demodulation circuit for detecting a received signal and regenerating an original digital code from the detected signal. FIG. 1 illustrates an example of a conventional multi-valued FSK demodulation circuit.

As illustrated in FIG.1, a signal received by a receiver 2 through an antenna 1 is detected by a detector 3, and a detected signal is output through a waveform shaping circuit 4 to a timing signal generator 5 which generates a timing signal synchronous with the waveform-shaped signal. A comparator 6 compares the detected signal with code discrimination levels CL1 - CL3, and a comparison result is output to a code discrimination circuit 7. The code discrimination circuit 7 regenerates an original digital code using the comparison result according to the timing signal. The code discrimination levels CL1 - CL3 for regenerating the digital code are generated by dividing constant voltage Vcc through resistors R1 - R4.

In fact, however, there is an occasion where a center voltage of the detected signal obtained by the detector 3 is varied owing to varieties of variation factors such as variations of a transmission frequency on the side of a transmitter, variations of propagation conditions of radio waves, a temperature change and a voltage change on the side of the receiver. Since the code discrimination levels are fixed, variations of the center voltage of the detected signal owing to such factors reduce a discrimination margin between each code discrimination level and a voltage of the detected signal, resulting in the increased possibility of discrimination error.

In a publication (Japanese Patent Laid-Open No. 1- 93950), a technique of improving code discrimination characteristics is disclosed, which utilizes a fact that an eye pattern is sharply opened by shifting sampling timings by T/2. This method, however, also suffers from a difficulty that the possibility of discrimination error is increased when the center voltage of the detected signal is varied because of the fixed code discrimination levels.

In another publication (Japanese Patent Laid-Open No. 1-164151), an improved code discrimination technique is disclosed, in which a code discrimination level follows up variations of the center voltage of a detected signal caused by blocking DC components in a receiver. However, this technique is to prevent an influence of the variations caused by DC blocking, so that the technique is likely to produce discrimination error provided the center voltage is varied owing to the aforementioned factors such as variations of transmission conditions.

From EP-A3-0 540 359 an adaptive threshold detector is known. It comprises a digital detector used in a paging system. This detector has reference levels, against which the received signal is compared with a digital comparator. The reference levels can be changed with an updating logic, if changes are observed in the levels of the received signals. The detector may also compensate for differences between individual FM detectors.

US-4,873,702 relates to a method and apparatus for DC restoration in digital receivers. A technique for eliminating unwanted DC offset voltages in a receiver for decoding a plurality of multilevel digitally modulated signals is disclosed. The data transmission system is arranged to send a particular preamble signal each time a different data source begins transmission of its data. The preamble signal produces at the receiver output multiple cycles of maximum level excursions. During the period of time that the preamble signal is received, a signal processor in the receiver determines an initial DC offset value by averaging the level of the received digitally modulated signal. After the transmission of the preamble, the signal processor continually generates updated DC offset voltages which are equal to the sum of the previously generated DC offset voltage and the difference between the amplitude level represented by the received digitally modulated signal and the amplitude level of the closest "coding" amplitude level; the difference being multiplied by a scaling factor.

In view of the drawbacks with the prior art, it is an object of the present invention to provide a demodulation circuit capable of achieving lower code discrimination error.

It is another object of the present invention to provide a demodulation circuit capable of performing correct code discrimination irrespective of variations of the center voltage of a detected signal.

The objects are achieved by the features of the claims.

The demodulation circuit according to the present invention includes an averaging circuit and a code discrimination circuit. The averaging circuit receives a detected signal and generates an averaged amplitude value of the detected signal. The code discrimination circuit generates code discrimination levels using the averaged amplitude value as a reference level and reproduces a digital signal from the detected signal by comparing the detected signal with these discrimination levels. A received signal is preferably comprised of a predetermined format including a preamble portion which is modulated such that the amplitude of the detected signal would be varied at a predetermined timing alternatively between the highest level and the lowest level of the amplitude of the detected signal.

The demodulation circuit according to the present invention is further comprised of a preamble detection circuit for detecting the preamble from the demodulated digital signal. An averaged amplitude value upon detection of the preamble is used as a reference level for generation of the discrimination levels. The reference average value is also usable as a reference level for waveform shaping.

A discrimination level generator includes a memory for storing the reference average value and another memory for storing a discrimination level difference corresponding to an ideal eye aperture of the detected signal. The discrimination level generator estimates a plurality of discrimination levels based upon the discrimination level difference and the reference average value of the detected signal.

The code discrimination circuit preferably includes an error correction circuit for correcting the detected signal to output an error corrected signal. The error correction circuit first generates a plurality of ideal amplitude levels of the detected signal based upon the discrimination level difference and the reference average value, and detects amplitude errors by comparing the detected signal with the ideal amplitude levels. The error correction circuit then cumulatively adds the amplitude errors by the predetermined number of timings and adds the result to the detected signal for error correction. An influence of noise to the detected signal is reduced by cumulatively adding amplitude errors and then correcting the detected signal.

The above and other objects, features and advantages of the present invention will become more apparent from the following description when taken in conjunction with the accompanying drawings in which preferred embodiments of the present invention are shown by way of illustrative examples.
FIG. 1 is a block diagram illustrating an example of a conventional multi-valued FSK demodulation circuit;
FIG. 2 is a block diagram illustrating a first embodiment of a demodulation circuit according to the present invention;
FIG. 3 is a circuit diagram illustrating in more detail a waveform shaping circuit and an averaging circuit in the embodiment of FIG.2;
FIG. 4 is a block diagram illustrating in more detail a code discrimination circuit in the same embodiment;
FIG. 5A is a block diagram illustrating in more detail a code discrimination level generator in the same embodiment;
FIG. 5B is a functional block diagram illustrating the function of the code discrimination level generator in FIG. 5A;
FIG. 6 is a view illustrating in waveforms a relationship between code discrimination levels generated by the code discrimination level generator in FIG. 5A and detected signals;
FIG. 7 is a view illustrating a relationship between the level of a digital code generated by the code discrimination circuit in FIG. 4 and eye patterns of the detected signal;
FIG. 8 is a block diagram illustrating in more detail a preamble detector in FIG. 2;
FIG. 9 is a view illustrating a format of a received signal;
FIG. 10 is a view of signal waveforms illustrating an example of operation of the present embodiment;
FIG. 11 is a block diagram illustrating a second embodiment of the demodulation circuit according to the present embodiment; and
FIG. 12 is a block diagram illustrating the code discrimination circuit in a third embodiment of the demodulation circuit according to the present invention.

In what follows, there will be described a circuit for demodulating a digital code from a received four-value FSK radio wave as an example.

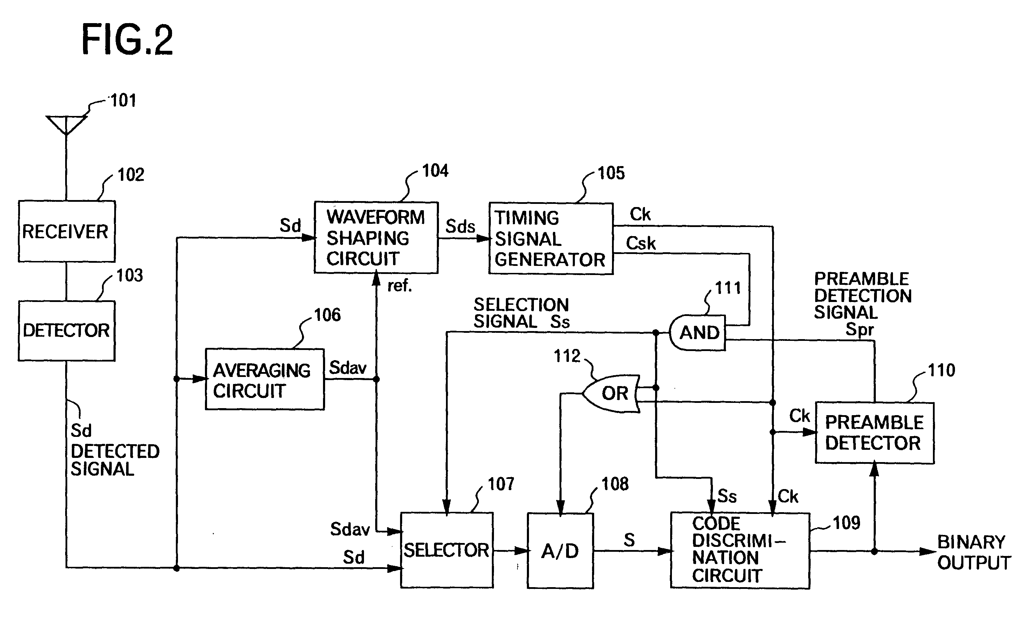

As illustrated in FIG. 2, a four-value FSK wave is received by a receiver 102 through an antenna 101 and is transferred to a detector 103. The detector 103 detects a signal Sd having four voltage levels from the received wave. The detected signal Sd is output to a waveform shaping circuit 104, an averaging circuit 106, and a selector 107.

The waveform shaping circuit 104 receives the detected signal Sd and outputs a waveform-shaped signal Sds to a timing signal generator 105. The timing signal generator 105 generates timing signals Ck and Csk using the waveform-shaped signal Sds. As described later, the timing signals Ck and Csk have the same frequency and have phases shifted each other by a half period. The detected signal Sd having the four voltage levels is averaged by the averaging circuit 106, and a resulting average voltage Sdav is output to the waveform shaping circuit 104 and the selector 107. The waveform-shaping circuit 104 uses the average voltage Sdav as a reference voltage for shaping waveforms.

The selector 107 selects any one of the detected signal Sd and the average value Sdav according to the selection signal Ss and outputs a selected signal to an analog-to-digital (A/D) converter 108. More specifically, when the selection signal Ss is set to a low level '0', the selector 107 selects the detected signal Sd while when the selection signal Ss is set to a high level '1', the selector 107 selects the average value Sdav. Any selected signal S is converted into a digital signal by the A/D converter 108 and is output to a code discrimination circuit 109.

The code discrimination circuit 109 is operated following the timing signal Ck and the selection signal Ss. When the selection signal Ss is a low level '0', or when the selected signal S is the detected signal Sd, the code discrimination circuit 109 performs code discrimination and outputs a demodulated digital code. In contrast, when the selection signal Ss is a high level '1', or when the selected signal S is the average value Sdav, the code discrimination circuit 109 uses the average value Sdav to set a reference level for generation of the code discrimination levels.

A preamble detector 110 inputs the demodulated digital code from the code discrimination circuit 109 and detects a preamble in the format of the received signal. Once the preamble detector 110 detects the preamble, it outputs a preamble detection signal Spr having a predetermined pulse width to an AND gate 111.

The AND gate 111 receives the timing signal Csk from the timing signal generator 105 and outputs the timing signal Csk only when the pulse of the preamble detection signal Spr is a high level. The output signal of the AND gate 111 is transferred to the selector 107 and the code discrimination circuit 109 as the selection signal Ss and also to an OR gate 112. The OR gate 112 outputs to the A/D converter 108 the timing signal Ck received from the timing signal generator 105 and the timing signal received from the AND gate 111.

### Averaging circuit

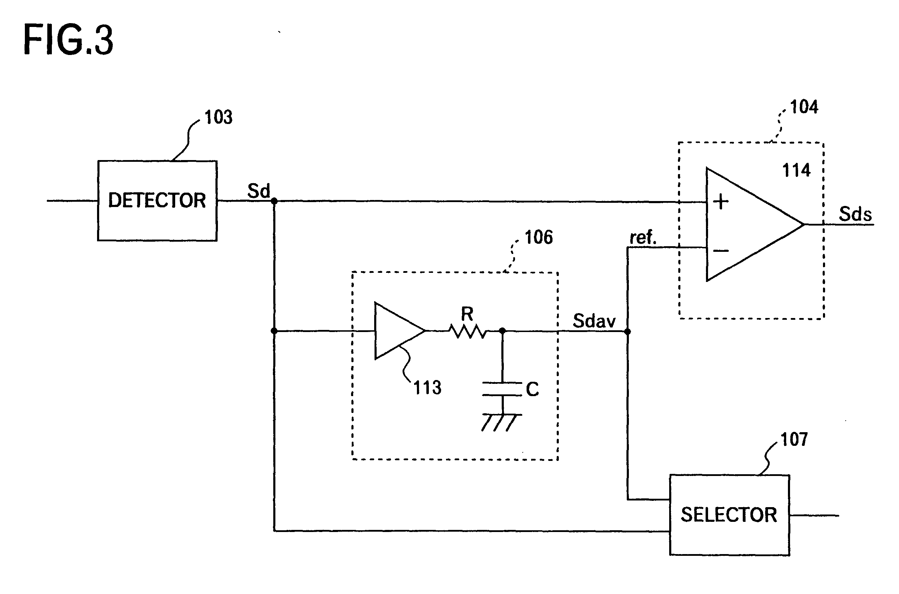

Referring to FIG. 3, there are illustrated the waveform-shaping circuit 104 and the averaging circuit 106 in an exemplified manner. The averaging circuit 106 is comprised of a buffer amplifier 113 and a smoothing circuit (or a low pass filter) composed of a resistor R and a capacitor C. The waveform-shaping circuit 104 is comprised of a comparator 114 which inputs the average value Sdav from the averaging circuit 106 as a reference voltage.

The detected signal Sd having four voltage levels is averaged with the low pass filter of the averaging circuit 106 into the average voltage Sdav substantially equal to the center voltage. The comparator 114 performs waveform-shaping of the detected signal Sd using the average value Sdav as the reference voltage. More specifically, the comparator 114 outputs a high-level signal provided the voltage of the detected signal Sd is more than the average value Sdav, while it outputs a low-level signal provided the same is lower than the average value Sdav. Therefore, the comparator 114 outputs a rectangular wave Sds suitable for extraction of the timing signal.

It is noted that, although the averaging circuit 106 is easy to be constructed with a digital circuit, for portable radio apparatuses a smoothing circuit comprising a resistor and a capacitor as shown in FIG. 3 is suitable for the purpose of light weight and energy saving.

### Code discrimination circuit

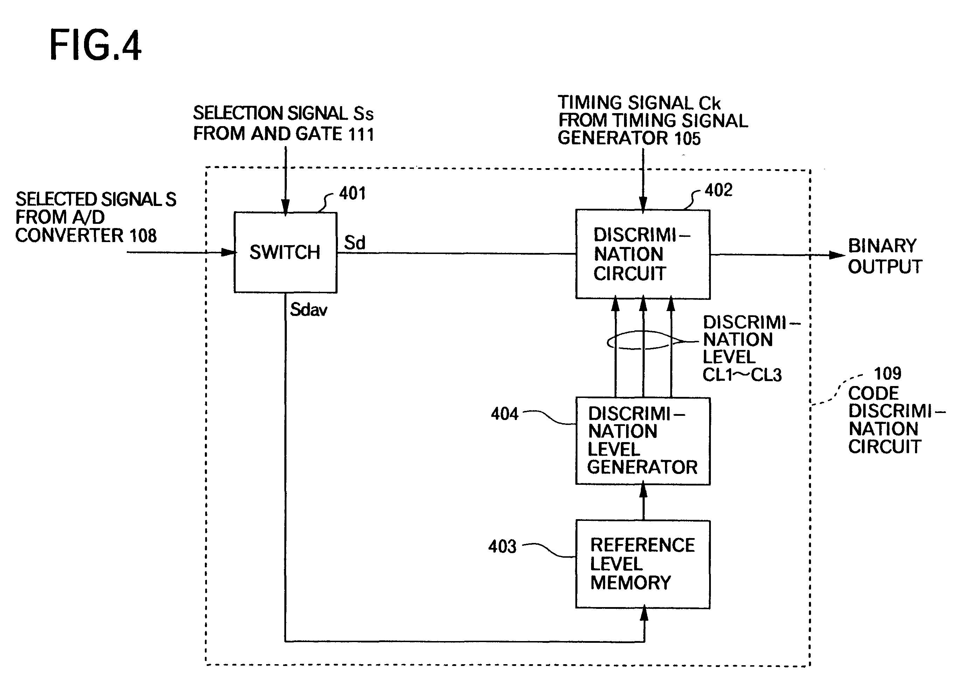

Referring to FIG. 4, there is illustrated in detail the code discrimination circuit 109. A switch 401 switches transfer directions of the selected signal S following the selection signal Ss received from the AND gate 111. More specifically, when the selection signal Ss is a low level, the switch 101 transfers the selected signal S, that is, the detected signal Sd to the discrimination circuit 402 while when the selection signal Ss is a high level, it transfers the selected signal S, that is, the average value Sdav to the reference level memory 403.

The reference level memory 403 stores a digital value of the average value Sdav as a reference level for generation of the code discrimination levels. A code discrimination level generator 404 generates three discrimination levels CL1 - CL3 with the assumption of the reference level as a central discrimination level (CL2), and outputs them to the discrimination circuit 402. The discrimination circuit 402 determines using the discrimination levels CL1 - CL3 which code level is indicated by the voltage of the detected signal Sd, and outputs a binary signal corresponding to the indicated code level following the timing signal Ck.

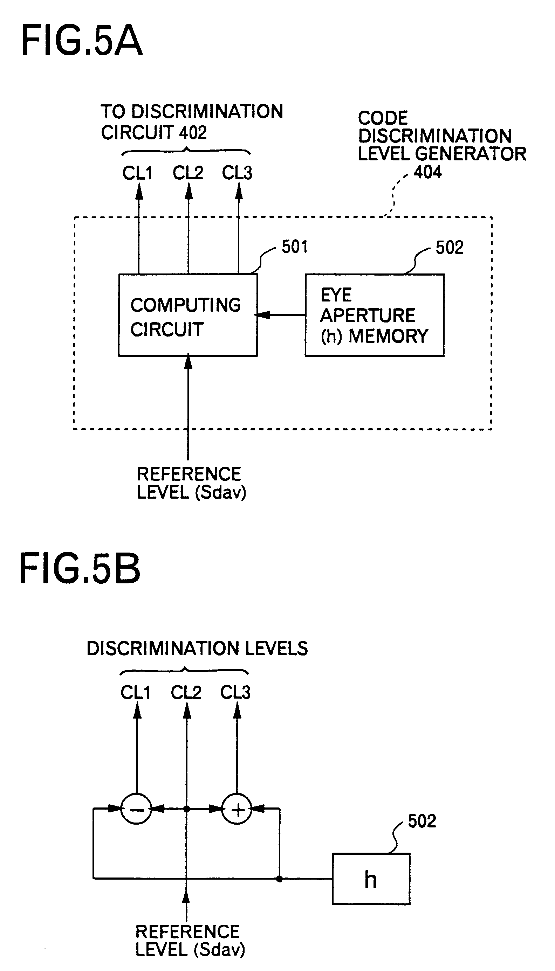

Referring to FIG. 5A, there is illustrated exemplarily a configuration of the code discrimination level generator 404, and FIG. 5B illustrates a functional block diagram indicative of the operation of the code discrimination level generator 404. A computing circuit 501 estimates the discrimination levels CL1 - CL3 using a discrimination level difference (h) previously stored in a memory 502 with the assumption of the reference level (Sdav) being the central discrimination level CL2. More concretely, the computing circuit 501, as illustrated in FIG. 5B, generates the discrimination level CL1 by subtracting the level difference (h) from the reference discrimination level CL2, and generates the discrimination level CL3 by adding the level difference (h) to the discrimination level CL2. The discrimination level difference (h) previously stored in the memory 502 is an ideal value corresponding to an eye aperture (h) in an eye pattern of the detection signal Sd.

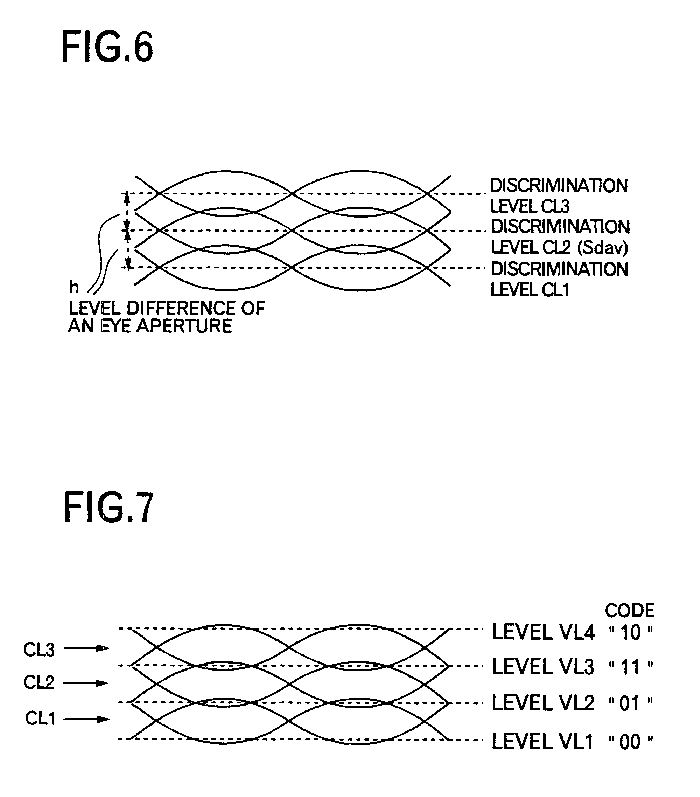

Referring to FIG. 6, there is illustrated a relationship among level positions of the discrimination levels CL1 - CL3 generated by the code discrimination level generator 404 and eye patterns of the detected signal Sd. The discrimination circuit 402 compares the input detected signal Sd with the discrimination levels CL1 - CL3, the discrimination levels CL1 and CL3 having the level difference (h) from the discrimination level CL2.

Referring to FIG. 7, there is illustrated a relationship among level positions of code levels VL1 - VL4 generated by the discrimination circuit 402 and eye patterns of the detected signal Sd. As illustrated in FIGs. 6 and 7, the discrimination circuit 402 judges that the detected signal Sd of a lower voltage than the discrimination level CL1 is the code level VL1 (code "00"), the detected signal Sd between the discrimination levels CL1 and CL2 is the code level VL2 (code '01'), the detected signal Sd between the discrimination levels CL2 and CL3 is the code level VL3 (code '11'), and the detected signal Sd higher than the discrimination level CL3 is the code level VL4 (code '10'), and the circuit 402 outputs a code corresponding to a judgement result synchronizing with the timing signal Ck. It should be noted that the code used here is Grey code.

### Preamble detector

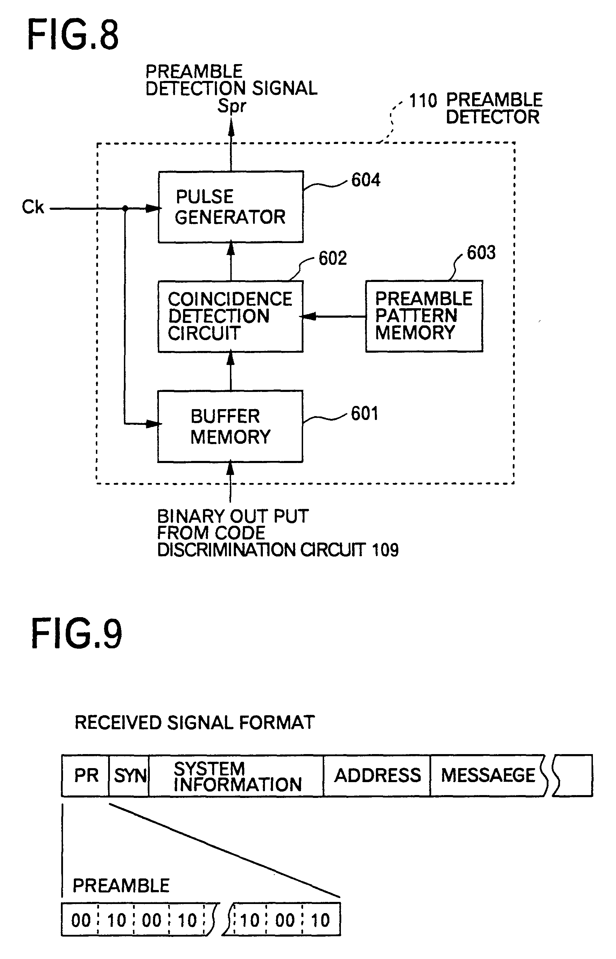

As shown in FIG. 8, the preamble detector 110 inputs a code reproduced by the code discrimination circuit 109 and detects a preamble portion in a received signal. A binary output of the code discrimination circuit 109 is stored in a buffer memory 601 of predetermined capacity. A coincidence detection circuit 602 reads data of the same length from both a preamble pattern memory 603 and a buffer memory 601, and determines whether they are coincident with each other or not. In the preamble pattern memory 603 there is previously stored a preamble pattern, say, '001000100010'.

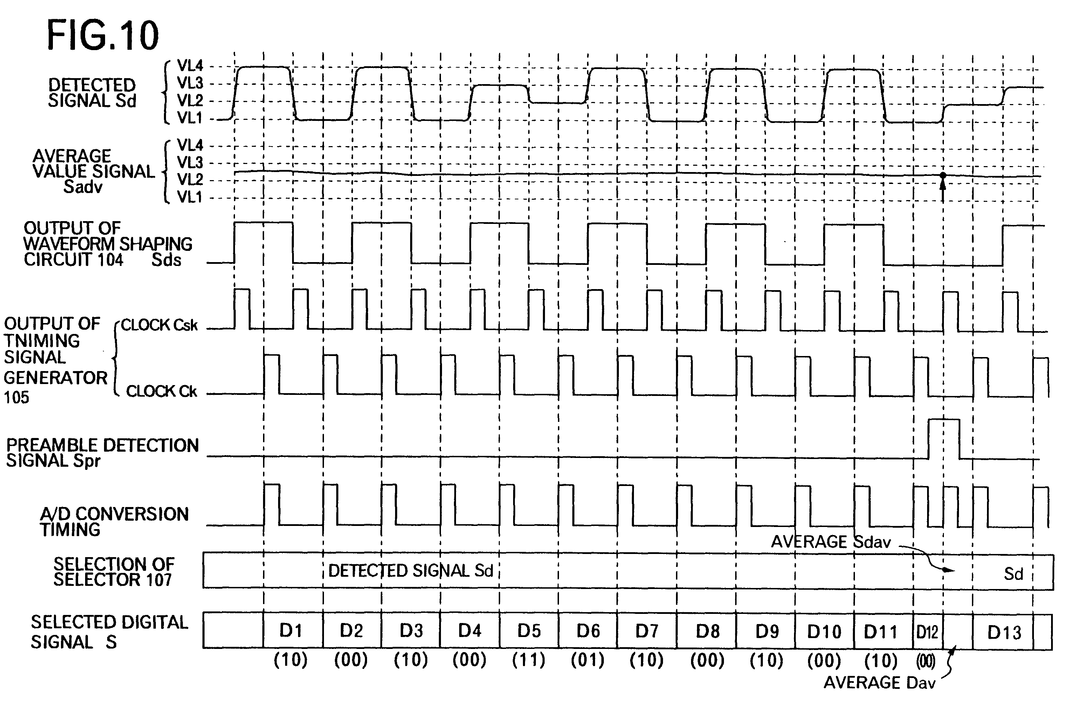

When the preamble pattern is coincident with the data of the same length read out from the buffer memory 601, the coincidence detection circuit 602 outputs a coincidence signal to a pulse generator 604. The pulse generator 604, once inputting the coincidence signal, generates a preamble detection signal Spr. The preamble detection signal Spr is generated during a time interval from the trailing edge of a pulse of the timing signal Ck to the leading edge of the subsequent pulse, as illustrated in FIG. 10.

### Preamble pattern and average value Sdav

As illustrated in FIG. 9, a received signal having a certain format includes a preamble PR which has a predetermined pattern, herein a repeated pattern of '0010'. In the Gray code, a code '00' corresponds to the lowest voltage level VL1 and a code '10' corresponds to the highest voltage level VL4, as illustrated in FIG. 7. Therefore, the code pattern in the preamble permits the highest and lowest levels to alternately appear, resulting in an detected signal Sd having no bias.

Such non-biassed detected signal Sd of the preamble is averaged by the averaging circuit 106 whereby an averaged value Sdav becomes a center voltage of the detected signal Sd useable for a reference of the code discrimination. Also in any multi-value modulation system other than the four-value FSK system, a detected signal of a preamble generally exhibits a repeated pattern of the highest and lowest levels, so that a center voltage of a received data signal can be detected with ease by averaging a detected signal of the repeated pattern. The averaged voltage value Sdav includes variations of the detected signal caused by variations of the aforementioned transmission conditions, etc., so that the averaged voltage Sdav is useable as a reference of code discrimination levels to ensure code discrimination not influenced by the variation factors.

### OPERATION OF THE DEMODULATION CIRCUIT

In the following, there will be described an operation of the present embodiment with reference to a timing chart in FIG. 10. In FIG. 10, there is illustrated a waveform of a detected signal when the preamble is received.

The detected signal Sd emitted from the detector 103 is a continuous wave, the amplitude of which is varied among the four voltage levels VL1 - VL4. Particularly, the detected signal Sd of the preamble has a waveform which is alternately varied between the lowest level VL1 and the highest level VL4, as described previously. The averaging circuit 106 averages such voltage variations of the detected signal Sd to generate the average voltage Sdav.

The waveform shaping circuit 104 shapes the waveform of the detected signal Sd using the average value Sdav as a reference to generate a rectangular signal Sds. The rectangular signal Sds is a pulse signal having a period substantially corresponding to an amplitude change in the detected signal Sd, as illustrated in FIG. 10. The timing signal generator 105 generates the two timing signals Csk and Ck in synchronization with the rectangular signal Sds. The timing signal Csk is in synchronization with the leading edge of the rectangular signal Sds, and the timing signal Ck has a timing at the center of a pulse of the rectangular signal Sds, in other words, the Ck timing is obtained by shifting the timing signal Csk by a half period.

The timing signal Ck is output from the timing signal generator 105 to the A/D converter 108 through the OR gate 112. According to the timing signal Ck, the A/D converter 108 converts a signal selected by the selector 107 from analog to digital.

When the preamble detection signal Spr has a low level '0', the selection signal Ss of the AND gate 111 is also a low level. Accordingly, the selector 107 selects the detected signal Sd, and the A/D converter 108 converts the detected signal Sd and outputs resulting digital signals S (D1, D2, D3, ...) to the code discrimination circuit 109. In the code discrimination circuit 109, the switch 401 transfers the digital-converted signal S to the discrimination circuit 402 where the original digital code is reproduced.

Once the preamble detector 110 detects the preamble using the data reproduced by the code discrimination circuit 109, the preamble detection signal Spr becomes a high level '1'. As illustrated in FIG. 10, the leading edge of the preamble detection signal Spr is in synchronization with the trailing edge of the timing signal Ck, and the timing instance of the leading edge of the timing signal Csk exists within the pulse width of the preamble detection signal Spr. The timing and pulse width of the preamble detection signal Spr are controlled by the pulse generator 604.

As the preamble detection signal Spr becomes a high level, the timing signal Csk is output as the selection signal Ss from the AND gate 111 to the selector 107, the A/D converter 108, and the code discrimination circuit 109. Hereby, the selector 107 selects the average value Sdav which is converted into the digital average value Dav by the A/D converter 108, and the switch 401 of the code discrimination circuit 109 transfers the digital average value Dav to the reference level memory 403. The average value Sdav at this time is obtained by averaging voltage changes of the detected signal in the preamble period, hence it represents the center voltage of an eye pattern of the detected signal Sd. Using such a newly introduced average value Dav, the code discrimination level generator 404 generates the code discrimination levels CL1-CL3.

Successively, as the preamble detection signal Spr goes downward, the selection signal Ss becomes a low level, and the selector 107 selects the detected signal Sd, whereby the aforementioned ordinary data reproduction operation is continued using the new discrimination levels CL1 - CL3.

The operation described above is repeated every time the preamble is detected. Hereby, even when the center voltage of a detected signal Sd is varied due to variations of transmission frequency and of propagation conditions of radio waves or temperature changes and changes in power supply voltage in a receiver, the code discrimination levels can follow up such variations to reduce the possibility of code discrimination errors. Further, since the reference voltage of the waveform shaping circuit 104 changes following variations of the center voltage of the detected signal Sd, the timing signals are caused to be accurate at all times.

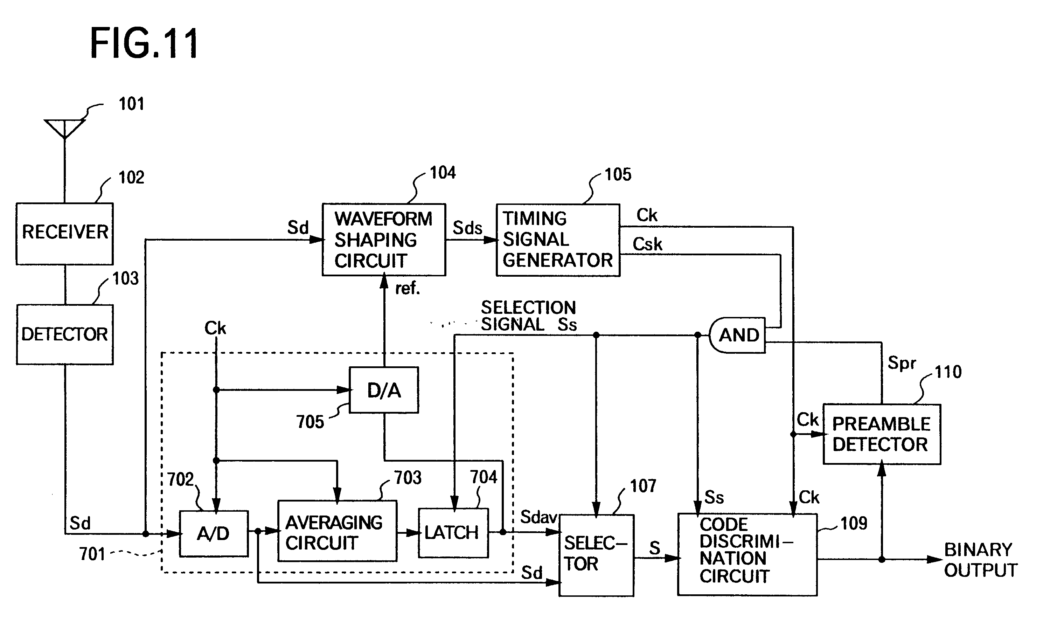

Referring to FIG. 11, a second embodiment of the present invention is illustrated. In the present embodiment, an averaging circuit 701 for averaging the voltages of the detected signal Sd is constructed with a digital circuit. An A/D converter 702, an average value calculator 703, and a D/A converter 705 are operated following the timing signal Ck, and a latch circuit 704 is operated following the selection signal Ss.

The A/D converter 702 converts the detected signal Sd and outputs the digital detected signal Sd to the code discrimination circuit 109 and the average value calculator 703. The average value calculator 703 calculates an average voltage value Sdav of the detected signal Sd. The average voltage value Sdav is stored in a latch circuit 704 in the timing of the selection signal Ss. The code discrimination circuit 109 generates the code discrimination levels CL1 - CL3 using the latched average value Sdav in the same manner as describe above, and carries out the code discrimination of the digital detected signal Sd received from the A/D converter 702 through the selector 107. Further, the latched average value Sdav is analog-converted by the D/A converter 705 and is used as the reference voltage of the waveform shaping circuit 104. It is noted that in the present embodiment the switch 401 and the reference level memory 403 in the code discrimination circuit 109 are not necessary.

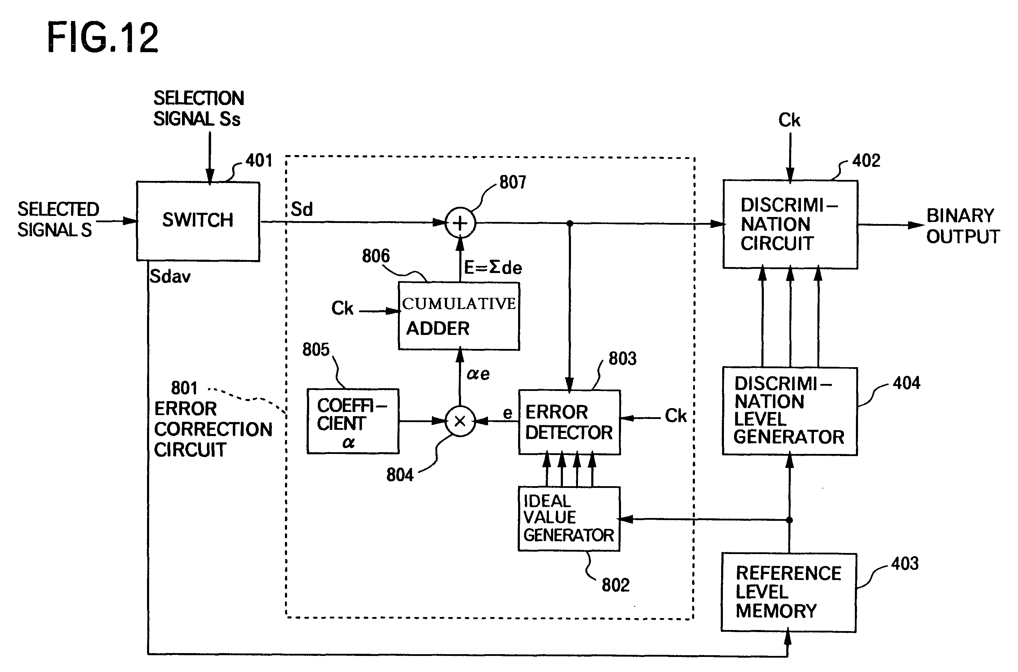

Referring to FIG. 12, there is illustrated the code discrimination circuit 109 in a third embodiment of the present invention. The code discrimination circuit 109 in the present embodiment performs error correction for the detected signal Sd. In the same figure, the detected signal Sd is transferred from the switch 401 to the discrimination circuit 402 through an error correction circuit 801.

An ideal value generator 802 in the error correction circuit 801 inputs the reference level (Sdav) from the reference level memory 403 and generates four ideal levels VL1 - VL4 (refer to FIG. 7). The ideal value generator 802 is constructed as in the code discrimination generator 404 illustrated in FIG. 5A. A computing circuit estimates (1/2)h and (3/2)h which are in turn added to or subtracted from the reference level to generate the ideal levels VL1 - VL4 as illustrated in FIG. 7.

An error detector 803, receiving the ideal levels VL1 - VL4, detects an error (e) between the detected signal Sd and the corresponding ideal level, and outputs the error (e) to a multiplier 804. The multiplier 804 multiplies the error (e) by a weight coefficient α stored in a memory 805 and outputs the result αe to a cumulative adder 806. The cumulative adder 806 adds αe by the predetermined number of timings and outputs an added value to an adder 807 as a correction value E. The adder 807 corrects the detected signal Sd using the correction value E and outputs the corrected detected signal Sd to the discrimination circuit 402. Even when much noise is involved in the detected signal Sd, the correction value E is generated by cumulatively adding αe by the predetermined number of timings, resulting in the reduced influence of that noise.

## Claims

1. A demodulation circuit for demodulating a detection signal (Sd) detected from a received multi-valued digital modulation wave into a digital signal, comprising:
(a) averaging means (106, 703) for averaging the amplitude of the detection signal (Sd) to generate an average amplitude value (Sdav);
(b) memory means (403) for storing the average amplitude value; and
(c) discrimination level generating means (404) for generating a plurality of discrimination level (CL1-CL3) using the average amplitude value as a reference level;
characterized by:
(d) ideal value generating means (802) for generating a plurality of ideal amplitude levels of the detection signal based on the average amplitude value;
(e) error detecting means (803) for detecting an amplitude error of the detection signal using the ideal amplitude levels;
(f) cumulative addition means (804, 805, 806) for cumulatively adding the amplitude error by a predetermined interval;
(g) correction means (801) comprising an adder (807) for correcting the detection signal (Sd) using a result value (E) of the cumulative addition means said adder being adapted to produce a corrected detection signal which is transferred as the detection signal to the error detecting means (803); and
(h) discrimination means (402) for comparing the amplitude of the corrected detection signal with the plurality of discrimination levels to reproduce the digital signal.

2. A demodulation circuit according to claim 1, wherein the received multi-valued digital modulation wave comprises a plurality of frames each having a predetermined time interval.

3. A demodulation circuit according to claim 2, wherein any of the frames includes a first signal portion (PR) modulated such that the amplitude of the detection signal would be varied alternatively between two levels each having a predetermined level difference from a center level of the largest amplitude of the detection signal in predetermined timing.

4. A demodulation circuit according to claim 3, characterized by:
detection means (110) for detecting the first signal portion of the frame from the digital signal reproduced by the discrimination means (109); and
selection means (107) for selecting an output signal of the averaging means when the first signal portion is detected by the detection means (110) as the average amplitude value.

5. A demodulation circuit according to claim 3 or 4, wherein the first signal portion comprises a preamble (PR) in a format of the frame.

6. A demodulation circuit according to any of claims 1-5, characterized by a waveform shaping means (104) for shaping the detection signal (Sd) using the averaged amplitude value (Sdav) as a reference level.

7. A demodulation circuit according to any of claims 1-5, wherein the discrimination level generating means (403, 404) is characterized by:
first memory means (403) for storing the average amplitude value;
second memory means (502) for storing a discrimination level difference corresponding to an ideal aperture of the detection signal; and
computing means (501) for estimating a plurality of discrimination levels (CL1-CL3) based upon the discrimination level difference and the average amplitude value.

## Patentansprüche

1. Demodulationsschaltung zum Demodulieren eines anhand einer empfangenen mehrwertigen Digitalmodulationswelle erfaßten Erfassungssignals (Sd) zu einem digitalen Signal, mit:
(a) einer Mittelwertbildungseinrichtung (106, 703) zum Mitteln der Amplitude des Erfassungssignals (Sd), um einen gemittelten Amplitudenwert (Sdav) zu erzeugen,
(b) einer Speichereinrichtung (403) zum Speichern des mittleren Amplitudenwerts und
(c) einer Unterscheidungspegel-Erzeugungseinrichtung (404) zum Erzeugen mehrerer Unterscheidungspegel (CL1 - CL3) unter Verwendung des mittleren Amplitudenwerts als Bezugspegel,
gekennzeichnet durch:
(d) eine Idealwert-Erzeugungseinrichtung (802) zum Erzeugen mehrerer idealer Amplitudenpegel des Erfassungssignals auf der Grundlage des mittleren Amplitudenwerts,
(e) eine Fehlererfassungseinrichtung (803) zum Erfassen eines Amplitudenfehlers des Erfassungssignals unter Verwendung der idealen Amplitudenpegel,
(f) eine Sammeladditionseinrichtung (804, 805, 806) zum sammelnden Addieren des Amplitudenfehlers mit einem vorgegebenen Intervall,
(g) eine Korrektureinrichtung (801) mit einem Addierer (807) zum Korrigieren des Erfassungssignals (Sd) unter Verwendung eines Ergebniswerts (E) der Sammeladditionseinrichtung, wobei der Addierer dafür ausgelegt ist, ein korrigiertes Erfassungssignal zu erzeugen, das als das Erfassungssignal zur Fehlererfassungseinrichtung (803) übertragen wird, und
(h) eine Unterscheidungseinrichtung (402) zum Vergleichen der Amplitude des korrigierten Erfassungssignals mit den mehreren Unterscheidungspegeln, um das digitale Signal wiederherzustellen.

2. Demodulationsschaltung nach Anspruch 1, wobei die empfangene mehrwertige Digitalmodulationswelle mehrere Rahmen aufweist, die jeweils ein vorgegebenes Zeitintervall haben.

3. Demodulationsschaltung nach Anspruch 2, wobei jeder der Rahmen einen ersten Signalabschnitt (PR) aufweist, der so moduliert ist, daß die Amplitude des Erfassungssignals abwechselnd zwischen zwei Pegeln geändert wird, die jeweils bei einer vorgegebenen Zeitsteuerung eine vorgegebene Pegeldifferenz von einem zentralen Pegel der größten Amplitude des Erfassungssignals aufweisen.

4. Demodulationsschaltung nach Anspruch 3, gekennzeichnet durch:
eine Erfassungseinrichtung (110) zum Erfassen des ersten Signalabschnitts des Rahmens anhand des von der Unterscheidungseinrichtung (109) wiederhergestellten digitalen Signals und
eine Auswahleinrichtung (107) zum Auswählen eines Ausgangssignals der Mittelwertbildungseinrichtung, wenn der erste Signalabschnitt als der mittlere Amplitudenwert von der Erfassungseinrichtung (110) erfaßt wird.

5. Demodulationsschaltung nach Anspruch 3 oder 4, wobei der erste Signalabschnitt einen Vorspann (PR) in einem Format des Rahmens aufweist.

6. Demodulationsschaltung nach einem der Ansprüche 1 - 5, gekennzeichnet durch eine Wellenform-Formungseinrichtung (104) zum Formen des Erfassungssignals (Sd) unter Verwendung des gemittelten Amplitudenwerts (Sdav) als Bezugspegel.

7. Demodulationsschaltung nach einem der Ansprüche 1 - 5, wobei die Unterscheidungspegel-Erzeugungseinrichtung (403, 404) durch folgendes gekennzeichnet ist:
eine erste Speichereinrichtung (403) zum Speichern des mittleren Amplitudenwerts,
eine zweite Speichereinrichtung (502) zum Speichern einer Unterscheidungspegeldifferenz entsprechend einer idealen Öffnung des Erfassungssignals und
eine Berechnungseinrichtung (501) zum Schätzen mehrerer Unterscheidungspegel (CL1 - CL3) auf der Grundlage der Unterscheidungspegeldifferenz und des mittleren Amplitudenwerts.

## Revendications

1. Circuit de démodulation destiné à démoduler un signal de détection (Sd) détecté à partir d'une onde de modulation numérique à valeurs multiples en un signal numérique, comprenant :
(a) des moyens de calcul de moyenne (106, 703) destinés à calculer la moyenne de l'amplitude du signal de détection (Sd) de manière à générer une valeur d'amplitude moyenne (Sdav) ;
(b) des moyens de mémoire (403) destinés à mémoriser la valeur d'amplitude moyenne ; et
(c) des moyens générateurs de niveaux de discrimination (404) destinés à générer une pluralité de niveaux de discrimination (CL1-CL3) en utilisant la valeur d'amplitude moyenne comme niveau de référence ;
caractérisé par :
(d) des moyens générateurs de valeurs idéales (802) destinés à générer une pluralité de niveaux d'amplitude idéaux du signal de détection sur la base de la valeur d'amplitude moyenne ;
(e) des moyens détecteurs d'erreur (803) destinés à détecter une erreur d'amplitude du signal de détection en utilisant les niveaux d'amplitude idéaux ;
(f) des moyens d'addition cumulée (804, 805, 806) destinés à additionner un intervalle prédéterminé à l'erreur d'amplitude en la cumulant ;
(g) des moyens de correction (801) comprenant un additionneur (807) et destinés à corriger le signal de détection (Sd) en utilisant une valeur de résultat (E) des moyens d'addition cumulée, ledit additionneur étant conçu pour produire un signal de détection corrigé qui est transféré, comme signal de détection, aux moyens détecteurs d'erreur (803) ; et
(h) des moyens de discrimination (402) destinés à comparer l'amplitude du signal de détection corrigé à la pluralité de niveaux de discrimination de manière à reproduire le signal numérique.

2. Circuit de démodulation selon la revendication 1, dans lequel l'onde de modulation numérique à valeurs multiples reçue comprend une pluralité de trames ayant chacune un intervalle de temps prédéterminé.

3. Circuit de démodulation selon la revendication 2, dans lequel l'une quelconque des trames inclut une première partie de signal (PR) modulée de telle sorte que l'amplitude du signal de détection alternerait entre deux niveaux ayant chacun une différence de niveau prédéterminée par rapport à un niveau central de l'amplitude la plus élevée du signal de détection selon une synchronisation prédéterminée.

4. Circuit de démodulation selon la revendication 3, caractérisé par :
des moyens de détection (110) destinés à détecter la première partie de signal de la trame à partir du signal numérique reproduit par les moyens de discrimination (109) ; et
des moyens de sélection (107) destinés à sélectionner un signal de sortie des moyens de calcul de moyenne lorsque la première partie de signal est détectée par les moyens de détection (110) comme valeur d'amplitude moyenne.

5. Circuit de démodulation selon la revendication 3 ou 4, dans lequel la première partie de signal comprend un préambule (PR) dans un format de la trame.

6. Circuit de démodulation selon l'une quelconque des revendications 1 à 5, caractérisé par des moyens de mise en forme de forme d'onde (104) destinés à mettre en forme le signal de détection (Sd) en utilisant la valeur d'amplitude moyenne (Sdav) comme niveau de référence.

7. Circuit de démodulation selon l'une quelconque des revendications 1 à 5, dans lequel les moyens générateurs de niveaux de discrimination (403, 404) sont caractérisés par :
des premiers moyens de mémoire (403) destinés à mémoriser la valeur d'amplitude moyenne ;
des seconds moyens de mémoire (502) destinés à mémoriser une différence de niveau de discrimination correspondant à une ouverture idéale du signal de détection ; et
des moyens de calcul (501) destinés à estimer une pluralité de niveaux de discrimination (CL1-CL3) sur la base de la différence de niveau de discrimination et la valeur d'amplitude moyenne.
